# EUROPEAN PATENT APPLICATION

(11) **EP 4 572 195 A1**
(43) Date of publication of application: **18.06.2025**
(21) Application number: 23864373.8
(22) Date of filing: 29.05.2023
(51) Int. Cl.: H04L 1/16

(54) **INFORMATION NOTIFICATION METHOD, NETWORK DEVICE AND COMPUTER-READABLE STORAGE MEDIUM**

(30) Priority: 15.09.2022 CN 202211122873
(71) Applicant: ZTE Corporation, Shenzhen, Guangdong 518057 (CN)
(72) Inventor: CHEN, Ran, Shenzhen, Guangdong 518057 (CN); XU, Benchong, Shenzhen, Guangdong 518057 (CN)
(74) Representative: Savi, Massimiliano
(86) International application number: PCT/CN2023/096865
(87) International publication number: WO 2024/055634

(57) **Abstract**

Disclosed in the present application are an information notification method, a network device and a computer-readable storage medium. The information notification method comprises: a first device receives a first message carrying mapping information and sent by a second device, the mapping information being used for representing a mapping relationship between target information and a target network resource division identifier, and one of the first device and the second device belonging to a forwarding node in a bit index explicit replication network.

## Description

### CROSS-REFERENCE TO RELATED APPLICATION

This application is filed on the basis of Chinese patent application No. 202211122873.0 filed September 15, 2022, and claims priority to the Chinese patent application, the entire contents of which are incorporated herein by reference.

### TECHNICAL FIELD

The present disclosure relates to the technical field of communication, and more particularly, to an information advertising method, a network device, and a computer-readable storage medium.

### BACKGROUND

In network communication, Bit Index Explicit Replication (BIER) is a novel multicast technology. Compared with conventional multicast technologies, BIER encapsulates a set of egress nodes to which a multicast packet is to be sent in the form of a Bitstring in a BIER header of the multicast packet. Upon receiving the packet including the BIER header, another Bit Forwarding Router (BFR) forwards the packet according to the Bitstring carried in the BIER header and a bit forwarding table. As a result, transit nodes in the network do not need to construct a multicast tree and save a multicast flow state on a per-flow basis, and only need to perform replication and forwarding according to the set of egress nodes in the packet header. This technology can significantly reduce the protocol complexity and the intermediate states of the intermediate network, can easily realize the transmission of the multicast flow in the intermediate network, and does not require the intermediate network to record any multicast flow state, thereby greatly simplifying the operation and maintenance of the network. At present, a variety of 5th-generation mobile communication technology (5G) bearer network slicing technologies have been proposed in the related art, such as an Interior Gateway Protocol (IGP) multi-topology technology, an IGP flexible algorithm (Flex-Algo) technology, and a Slice Aggregation (SA) technology. In the IGP multi-topology technology, a physical network topology is divided into multiple logical sub-topologies, and different overlay services are allocated to different logical sub-topologies. In the IGP Flex-Algo technology, multiple IGP algorithms are run in the same topology to calculate multiple Flex-Algo planes, and different overlay services are iterated to different Flex-Algo planes. In the SA technology, the underlying topology of which may be a physical topology, a Flex-Algo, or a multi-topology, a physical network topology or logical topology is divided into multiple logical sub-topologies, and overlay services are advertised based on each slice aggregation or each slice Segment Identity document (SID) through a control plane. However, the multi-topology technology, the Flex-Algo technology, and the SA technology are all specific methods for implementing a slicing function in an Internet Protocol (IP)/Multi-Protocol Label Switching (MPLS) network. Conventional schemes of transmitting data in the form of slices in a BIER network are not perfect. For example, in a centralized scenario, a Software Defined Network (SDN) controller needs to first learn Bit Index Explicit Replication-Traffic Enginering (BIER-TE) information in a BIER-TE network through BGP-LS, then calculate a BIER-TE path, and distribute the BIER-TE path to an ingress node through a southbound interface. However, when a network slicing technology is integrated in the BIER network, multiple slices exist in the network, and there is currently no related technology to implement slice-based BIER-TE information collection and path calculation and delivery. Additionally, in a path computation element as a central controller (PCECC) scenario, a PCECC can be used as a centralized label controller and can support a label downloading capability, for use in a BIER/BIER-TE network, this is reflected in that the PCECC delivers BIER information to BFR nodes in the BIER network. However, currently no solution has been proposed to implement slice association while delivering BIER information through the PCECC.

### SUMMARY

Embodiments of the present disclosure provide an information advertising method, a network device, a computer-readable storage medium, and a computer program product, to advertise a network resource partition identifier in a BIER network.

In accordance with a first aspect of the present disclosure, an embodiment provides an information advertising method, including: receiving, by a first device, a first message carrying mapping information from a second device, where the mapping information is used for representing a mapping relationship between target information and a target network resource partition identifier, and one of the first device and the second device is a forwarding node in a BIER network.

In accordance with a second aspect of the present disclosure, an embodiment provides a network device, including: at least one processor; and at least one memory, configured for storing at least one program, the at least one program, when executed by the at least one processor, causes the at least one processor to implement the information advertising method in accordance with the first aspect.

In accordance with a third aspect of the present disclosure, an embodiment provides a computer-readable storage medium, storing a processor-executable program which, when executed by a processor, causes the processor to implement the information advertising method in accordance with the first aspect.

In accordance with a fourth aspect of the present disclosure, an embodiment provides a computer program product, storing computer instructions which, when executed by a computer, cause the computer to implement the information advertising method in accordance with the first aspect.

Embodiments of the present disclosure include: receiving, by a first device, a first message carrying mapping information from a second device, where the mapping information is used for representing a mapping relationship between target information and a target network resource partition identifier, and one of the first device and the second device is a forwarding node in a BIER network. According to the scheme provided by the embodiments of the present disclosure, information for carrying a target network resource partition identifier is extended in a message exchanged between a controller and a BFR, to realize a mapping relationship between target information and the target network resource partition identifier.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

FIG. 1 is a schematic networking diagram illustrating a BIER technology to which embodiments of the present disclosure are applicable;
FIG. 2 is a schematic flowchart illustrating an information advertising method according to an embodiment of the present disclosure;
FIG. 3 is a first schematic diagram illustrating a format of a Border Gateway Protocol (BGP) message in an information advertising method according to an embodiment of the present disclosure;
FIG. 4 is a second schematic diagram illustrating a format of a BGP message in an information advertising method according to an embodiment of the present disclosure;
FIG. 5 is a schematic diagram illustrating a format of an NRP BIER-TE-ERO Subobject of a Path Computation Element Communication Protocol (PCEP) message in an information advertising method according to an embodiment of the present disclosure;
FIG. 6 is a schematic diagram illustrating a format of a BIER-TE-ERO Subobject of a PCEP message in an information advertising method according to an embodiment of the present disclosure;
FIG. 7 is a schematic diagram illustrating a format of N bits in an extended PCECC capability TLV in an information advertising method according to an embodiment of the present disclosure;
FIG. 8 is a first schematic diagram illustrating a format of a PCEP message in an information advertising method according to an embodiment of the present disclosure;
FIG. 9 is a second schematic diagram illustrating a format of a PCEP message in an information advertising method according to an embodiment of the present disclosure;
FIG. 10 is a third schematic diagram illustrating a format of a PCEP message in an information advertising method according to an embodiment of the present disclosure;
FIG. 11 is a fourth schematic diagram illustrating a format of a PCEP message in an information advertising method according to an embodiment of the present disclosure;
FIG. 12 is a fifth schematic diagram illustrating a format of a PCEP message in an information advertising method according to an embodiment of the present disclosure; and
FIG. 13 is a schematic diagram illustrating a network device according to an embodiment of the present disclosure.

### DETAILED DESCRIPTION

To make the purposes, technical schemes, and advantages of the present disclosure clearer, the present disclosure is described in further detail in conjunction with accompanying drawings and embodiments. It should be understood that the specific embodiments described herein are merely used for illustrating the present disclosure, and are not intended to limit the present disclosure.

It should be understood that in the description of the embodiments of the present disclosure, the terms such as "first" and "second" used herein are merely used for distinguishing technical features, and are not intended to indicate or imply relative importance, or implicitly point out the number of the indicated technical features, or implicitly point out the order of the indicated technical features. The term "at least one" means one or more and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects.

In addition, the technical features involved in various embodiments of the present disclosure described below can be combined with each other if not in collision.

Before introducing the technical scheme of the embodiments of the present disclosure, an application scenario of the embodiments of the present disclosure will be described as an example. In a BIER domain, each edge Bit-Forwarding Egress Router (BFER) is assigned a bit position which is globally unique in an entire BIER sub-domain. Each BFER floods its bit position in the BIER domain through the Interior Gateway Protocol (IGP). All bit positions form a Bitstring. The transmission and routing of data packets in the BIER domain rely on the Bitstring. Upon receiving the packet including the BIER header, another BFR forwards the packet according to the Bitstring carried in the BIER header and a bit forwarding table. Therefore, transit nodes in the network do not need to construct a multicast tree and save a multicast flow state on a per-flow basis, and only need to perform replication and forwarding according to the set of egress nodes in the packet header. This technology can greatly reduce the protocol complexity and the intermediate states of the intermediate network, can easily realize the transmission of the multicast flow in the intermediate network, and does not require the intermediate network to record any multicast flow state, thereby greatly simplifying the operation and maintenance of the network.

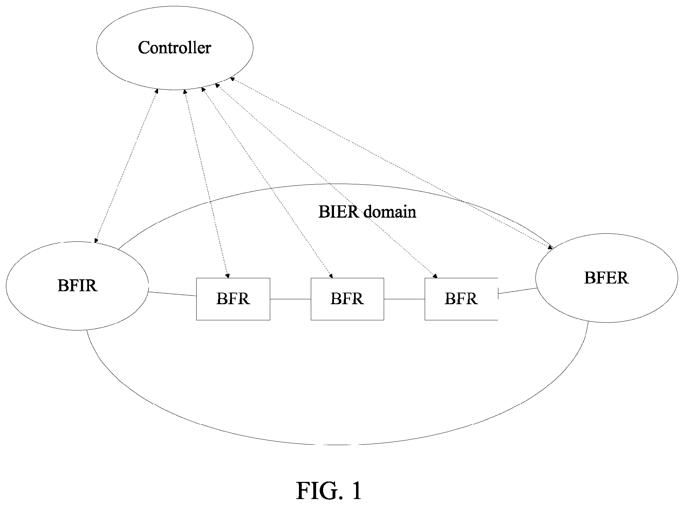

FIG. 1 is a schematic networking diagram illustrating a BIER technology. A BIER network includes a Bit-Forwarding Ingress Router (BFIR), a Bit-Forwarding Egress Router (BFER), and BFRs in a path between the BFIR and the BFER. It can be understood that the BFIR is equivalent to a head node of the BIER network.

Similar to the BIER network, in a BIER-TE network, a packet is forwarded and replicated according to a BitString in a packet header. BIER-TE is mainly different from BIER in the following aspects.
1) An explicit path computed by a BIER-TE controller is used to replace automatic path computation within the network.
2) A BitPosition of each bit in the BitString represents one or more adjacencies rather than one BFER.
3) The BFRs only needs to maintain a BIER-TE Forwarding Table (BIFT), and does not need to maintain a routing table.

In view of the above, embodiments of the present disclosure provide an information advertising method, a network device, a computer-readable storage medium, and a computer program product, to at least solve the problem of how to implement slice advertising in a BIER network. The BIER network includes, but not limited to, the following networks: a BIER network, a BIER-TE network, and BIER Tree network.

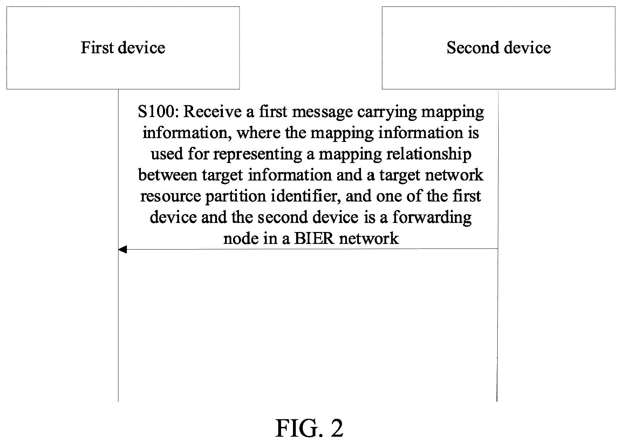

FIG. 2 is a schematic flowchart of an information advertising method according to an embodiment of the present disclosure. As shown in FIG. 2, the method includes, but not limited to, a following step S100.

At S100, a first device receives a first message carrying mapping information from a second device, where the mapping information is used for representing a mapping relationship between target information and a target network resource partition identifier, and one of the first device and the second device is a forwarding node in a BIER network.

In the scheme of the embodiment of the present disclosure, one of the first device and the second device is a forwarding node in the BIER network, and the first device receives a first message carrying mapping information from the second device.

For example, when one of the first device and the second device is a forwarding node in the BIER network, the target information may include one of the following: a Bit Index Forwarding Table (BIFT) identifier (BIFT-ID), a BFR identifier (BFR-ID), a BIER sub-domain identifier, and a BIER path.

For example, when one of the first device and the second device is a forwarding node in an engineering-based BIER network, the target information may include one of the following: a BIFT-ID, a BFR-ID, a Bitposition, and a BIER-TE path.

For example, the target network resource partition identifier includes one of: a slice identifier, a slice aggregation identifier, a network resource partition identifier, a multi-topology identifier, and a flexible algorithm identifier.

It should be noted that the engineering-based BIER network may be a BIER-Tree Engineering network or BIER-TE network, which is not particularly limited in this embodiment.

It should be noted that the first device and the second device may correspond to different devices according to different transmission protocols, which is not particularly limited in this embodiment. For example, when the first message sent by the second device to the first device is a BGP message, the first device is a head node in the BIER network, and the second device is a controller. When the first message sent by the second device to the first device is a Border Gateway Protocol Link-state (BGP-LS) message, the first device is a controller, and the second device is a head node in the BIER network. When the first message sent by the second device to the first device is a PCEP message, the first device is a node in the BIER network, and the second device is a controller. When the first message sent by the second device to the first device is a Network Configuration Protocol (NETCONF) message, the first device is a node in the BIER network, and the second device is a controller.

An embodiment of the present disclosure provides an information advertising method based on a BGP message, which includes S100, including, but not limited to: receiving, by a head node of a BIER network, a first message carrying mapping information from a controller, where the first message is a BGP message, and the mapping information is used for representing a mapping relationship between a BIER path and a target network resource partition identifier.

Particularly, the head node of the BIER network receives mapping information sent by the controller through the BGP protocol, where the mapping relationship carries the target network resource partition identifier and the BIER path; and imports a data message belonging to the target network resource partition identifier into the BIER path. It should be noted that the BGP message may include a BIER tunnel encapsulation attribute for carrying the mapping information or an engineering-based BIER tunnel encapsulation attribute for carrying the mapping information.

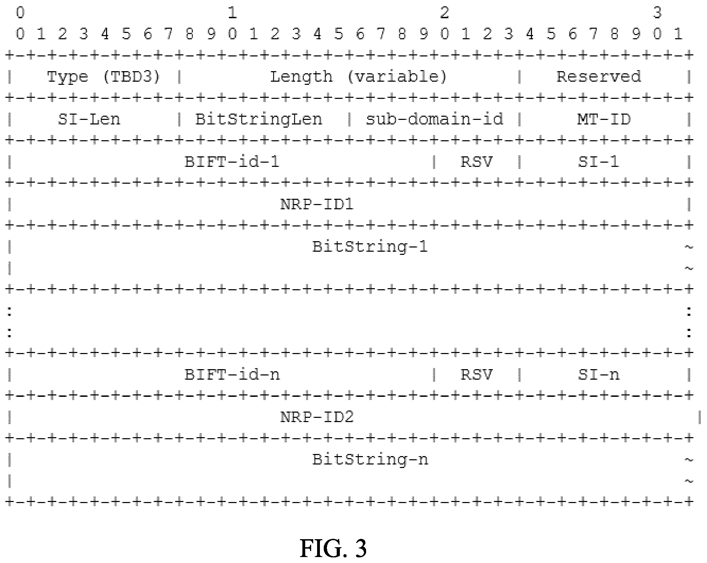

FIG. 3 is a first schematic diagram illustrating a format of a BGP message in an information advertising method according to an embodiment of the present disclosure. As shown in FIG. 3, when the BGP message includes the engineering-based BIER tunnel encapsulation attribute carrying the mapping information, the engineering-based BIER tunnel encapsulation attribute includes an NRP Path Bitstring sub-TLV, and the mapping information is carried in the NRP Path Bitstring sub-TLV.

The controller sends the mapping information carrying the target network resource partition identifier and the BIER path to the head node of the BIER network through a BGP message. Particularly, in the BIER-TE path tunnel encapsulation attribute, a new NRP Path Bitstring sub-TLV is extended, and a target network resource partition identifier (NRP-ID) is extended in the new NRP Path Bitstring sub-TLV. Upon receiving the NRP Path Bitstring sub-TLV, the head node may acquire a mapping relationship between the NRP-ID and a BIER-TE path from the NRP Path Bitstring sub-TLV, and import a data packet belonging to the target network resource partition identifier to the BIER-TE path.

It should be noted that the NRP-ID may be a Flex-Algo ID (flexible algorithm identifier), or a VTN ID (multi-topology identifier), or a Slice-ID (slice identifier), or a Resource ID (network resource partition identifier), or a slice aggregation ID (slice aggregation identifier), which is not particularly limited in this embodiment.

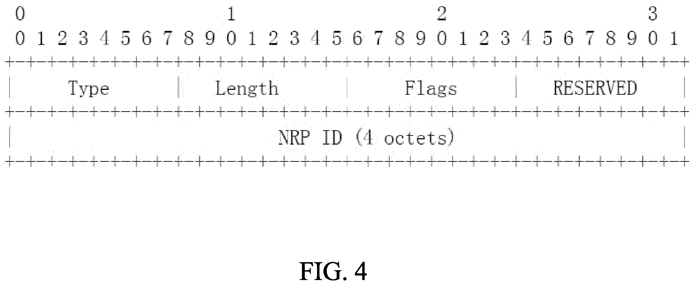

FIG. 4 is a second schematic diagram illustrating a format of a BGP message in an information advertising method according to an embodiment of the present disclosure. As shown in FIG. 4, when the BGP message includes the engineering-based BIER tunnel encapsulation attribute carrying the mapping information, the engineering-based BIER tunnel encapsulation attribute includes an NRP-ID sub-TLV and a Path Bitstring sub-TLV, the target network resource partition identifier is carried in the NRP-ID sub-TLV, and an engineering-based BIER path is carried in the Path Bitstring sub-TLV.

The controller sends a BGP message carrying the target network resource partition identifier and the BIER-TE path to the head node of the BIER network. Particularly, a new NRP-ID sub-TLV is extended in a tunnel encapsulation attribute. Upon receiving the BGP message, the head node may acquire a mapping relationship between an NRP-ID and a BIFT-ID from the BGP message, and import a data packet belonging to the target network resource partition identifier into the BIER-TE path.

In an example, when the BGP message includes the BIER tunnel encapsulation attribute carrying the mapping information, the mapping information is carried in a BIER tunnel encapsulation TLV.

In an example, when the BGP message includes the engineering-based BIER tunnel encapsulation attribute carrying the mapping information, the engineering-based BIER tunnel encapsulation attribute includes an NRP-ID sub-TLV and a Path Bitstring sub-TLV, the target network resource partition identifier is carried in the NRP-ID sub-TLV, and an engineering-based BIER path is carried in the Path Bitstring sub-TLV.

An embodiment of the present disclosure provides an information advertising method based on a BGP-LS message, which includes S100, including, but not limited to: receiving, by a controller, a first message carrying a target network resource partition identifier from a head node of a BIER network, where the first message is a BGP-LS message, the mapping information represents a mapping relationship between target information and the target network resource partition identifier, and the target information includes a BIFT-ID or a BFR-ID or a Bitposition or a BIER sub-domain identifier.

Particularly, the controller receives BIER information (BGP-LS message) sent by the head node of the BIER network through the BGP-LS protocol, where the BIER information carries the target network resource partition identifier; and can collect the mapping information carrying the target information and the target network resource partition identifier through the BGP-LS protocol.

It should be noted that the BGP-LS message may carry mapping information between BIER-related target information and the target network resource partition identifier, or may carry mapping information between BIER-TE-related target information and the target network resource partition identifier, which is not particularly limited in this embodiment.

When the BGP-LS message includes the mapping information carrying the BIER-related target information and the target network resource partition identifier, various extension methods may be used. In one extension method, the target network resource partition identifier is carried in a BIER information TLV. In this case, the mapping information is used for representing a mapping relationship between a BFR identifier and the target network resource partition identifier, or the mapping information is used for representing a mapping relationship between a BIER sub-domain identifier and the target network resource partition identifier. In another extension method, the target network resource partition identifier is carried in a BIER MPLS Encapsulation TLV or a BIER non-MPLS Encapsulation TLV. In this case, the mapping information represents a mapping relationship between the target network resource partition identifier and a BIFT identifier.

In an example, when the BGP-LS message includes mapping information carrying the BIER-related target information and the target network resource partition identifier, the mapping information is used for representing a mapping relationship between a BFR identifier and the target network resource partition identifier, the BIER information includes a BIER information TLV, and the mapping information is carried in the BIER information TLV.

In an example, when the BGP-LS message includes the mapping information carrying the BIER-related target information and the target network resource partition identifier, the mapping information is used for representing a mapping relationship between a BIFT identifier and the target network resource partition identifier, the BIER information includes a BIER MPLS Encapsulation TLV or a BIER non-MPLS Encapsulation TLV, and the mapping information is carried in the BIER MPLS Encapsulation TLV or the BIER non-MPLS Encapsulation TLV.

When the BGP-LS message includes the mapping information carrying the BIER-TE-related target information and the target network resource partition identifier, various extension methods may be used. In one possible extension method, the target network resource partition identifier is carried in a BIER-TE information TLV. In this case, the mapping information is used for representing a mapping relationship between the target network resource partition identifier and a bit position, or the mapping information is used for representing a mapping relationship between a BIER sub-domain identifier and the target network resource partition identifier. In another extension method, the target network resource partition identifier is carried in a BIER-TE MPLS Encapsulation TLV or a BIER-TE non-MPLS Encapsulation TLV. In this case, the mapping information represents a mapping relationship between the target network resource partition identifier and a BIFT identifier.

In an example, when the BGP-LS message includes mapping information carrying the BIER-TE-related target information and the target network resource partition identifier, the mapping information is used for representing a mapping relationship between a bit position and the target network resource partition identifier, the BIER-TE information includes a BIER-TE information TLV, and the mapping information is carried in the BIER-TE information TLV.

In an example, when the BGP-LS message includes the mapping information carrying the BIER-TE-related target information and the target network resource partition identifier, the mapping information is used for representing a mapping relationship between a BIFT identifier and the target network resource partition identifier, the engineering-based BIER information includes a BIER-TE MPLS Encapsulation TLV or a BIER-TE non-MPLS Encapsulation TLV, and the mapping information is carried in the BIER-TE MPLS Encapsulation TLV or the BIER-TE non-MPLS Encapsulation TLV.

It should be noted that the NRP-ID (target network resource partition identifier) may be a Flex-Algo ID (flexible algorithm identifier), or a VTN ID (multi-topology identifier), or a Slice-ID (slice identifier), or a Resource ID (network resource partition identifier), or a slice aggregation ID (slice aggregation identifier), which is not particularly limited in this embodiment.

In an example, when the BGP-LS message carries mapping information, and the mapping information is used for representing a mapping relationship between a BIER path and the target network resource partition identifier, the mapping information is carried in a BIER tunnel attribute.

In an example, when the BGP-LS message carries mapping information, and the mapping information is used for representing a mapping relationship between a BIER-TE path and the target network resource partition identifier, the mapping information is carried in a BIER-TE tunnel attribute.

An embodiment of the present disclosure provides an information advertising method based on a PCEP message, which includes S100, including, but not limited to: receiving, by a head node of a BIER network, a first message carrying mapping information from a controller, where the first message is a PCEP message, and the mapping information is used for representing a mapping relationship between target information and a target network resource partition identifier.

Particularly, the BFIR, the BFER, and the BFR are collectively referred to as a Path Computation Client (PCC), and a Path Computation Element (PCE) assigns labels to the PCCs in the network and sends various control signaling. The BFIR, the BFER, and the BFR are located in the BIER network. The head node (BFIR) in the BIER network receives a BIER-TE path (PCEP message) sent by the controller through the PCEP protocol, where the BIER-TE path carries the target network resource partition identifier. After receiving a mapping relationship carrying the target network resource partition identifier and the BIER-TE path, the head node of the BIER network imports a data packet belonging to the target network resource partition identifier into the BIER-TE path. In the technical scheme of this embodiment, the mapping relationship between the target network resource partition identifier and the BIER-TE path can be advertised in the BIER network through the PCEP message.

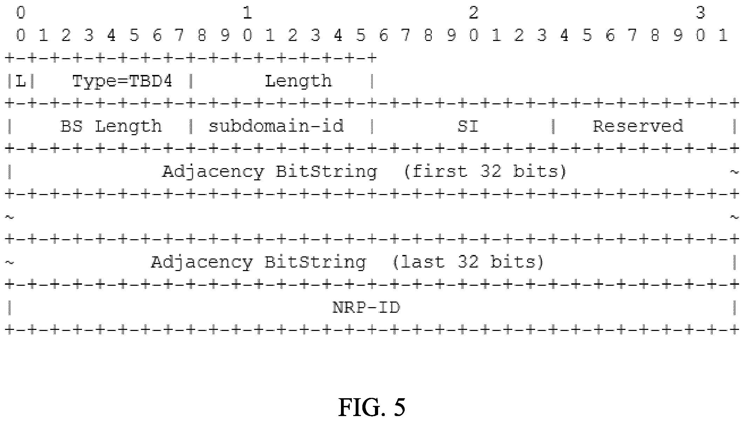

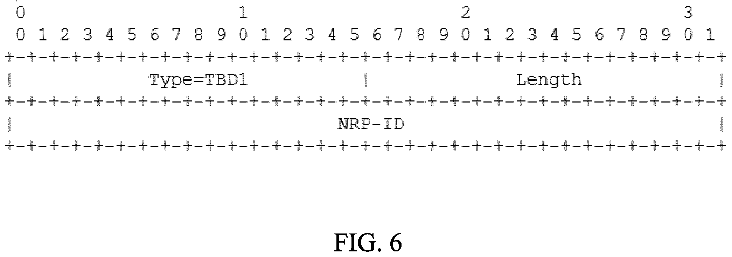

In an example, the PCEP message carries an NRP BIER-TE-ERO Subobject, and the mapping relationship between the target network resource partition identifier and the BIER-TE path is carried in the NRP BIER-TE-ERO Subobject (as shown in FIG. 5). Alternatively, the PCEP message carries an NRP ID TLV and a BIER-TE-ERO Subobject, the target network resource partition identifier message is carried in the NRP ID TLV, and the BIER-TE path is carried in the BIER-TE-ERO Subobject (as shown in FIG. 6).

It should be noted that the NRP-ID (target network resource partition identifier) may be a Flex-Algo ID (flexible algorithm identifier), or a VTN ID (multi-topology identifier), or a Slice-ID (slice identifier), or a Resource ID (network resource partition identifier), or a slice aggregation ID (slice aggregation identifier), which is not particularly limited in this embodiment.

An embodiment of the present disclosure provides an information advertising method based on a PCEP message, which includes S100, including, but not limited to: receiving, by a node of a BIER network, a first message carrying mapping information from a controller, where the first message is a PCEP message, and the mapping information is used for representing a mapping relationship between target information and a target network resource partition identifier.

Particularly, the controller delivers mapping information to each BFR in the BIER network through a PCECC, where the mapping information is used for representing a mapping relationship between a BIFT identifier and the target network resource partition identifier.

It should be noted that the BFIR, the BFER, and the BFR are collectively referred to as a PCC, and a PCE assigns BIER information to the PCCs in the network and sends various control signaling. The BFIR, the BFER, and the BFR are located in the BIER network.

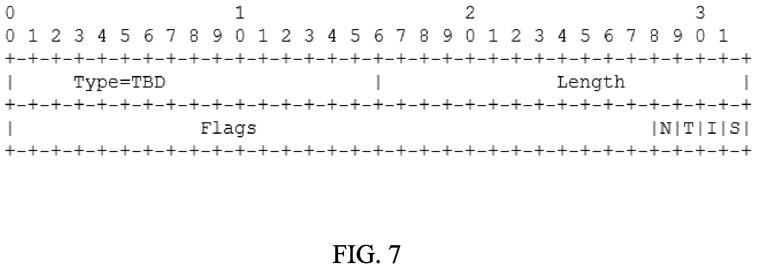

First, support of a PCECC-slicing capability is advertised between the PCC and the PCE, and a bit N is extended in a PCECC capability TLV defined in Internet Engineering Task Force (IETF) RFC 9050 (as shown in FIG. 7). The extended bit N is used for representing that the PCE and the PCC support the PCECC-slicing capability. The PCE allocates a mapping relationship between a BIFT identifier and a target network resource partition identifier or a mapping relationship between a BFR identifier and a target network resource partition identifier to each BFR in the BIER network. After receiving the target network resource partition identifier, each PCC determines a next hop according to local routing information and downloads a corresponding forwarding indication.

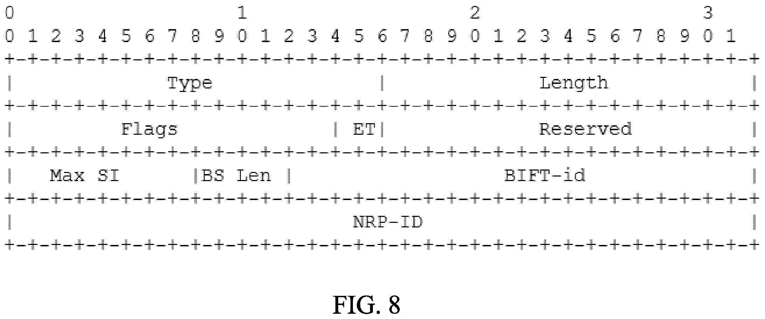

FIG. 8 is a first schematic diagram illustrating a format of a PCEP message in an information advertising method according to an embodiment of the present disclosure. For a PCEP message used in a BIER network, a target network resource partition identifier may be allocated based on each BIFT identifier, i.e., the PCE allocates a mapping relationship between the BIFT identifier and the target network resource partition identifier to each BFR in the BIER network.

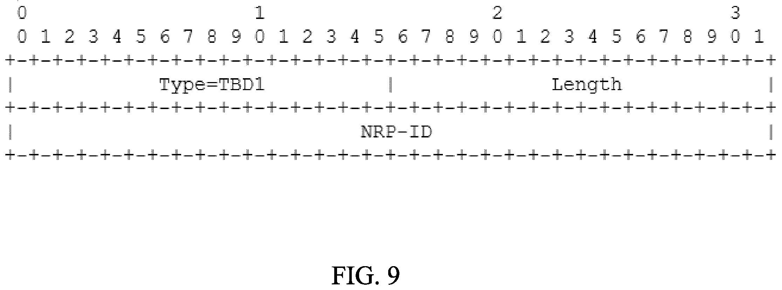

FIG. 9 is a second schematic diagram illustrating a format of a PCEP message in an information advertising method according to an embodiment of the present disclosure. For a PCEP message used in the BIER network, an NRP-ID TLV is extended in a BIER CCI object field in the PCEP message, such that the PCEP message includes the NRP-ID TLV, the target network resource partition identifier is carried in the NRP-ID TLV, the target information is carried in the BIER CCI object field, and the NRP-ID TLV is carried in the BIER CCI object field.

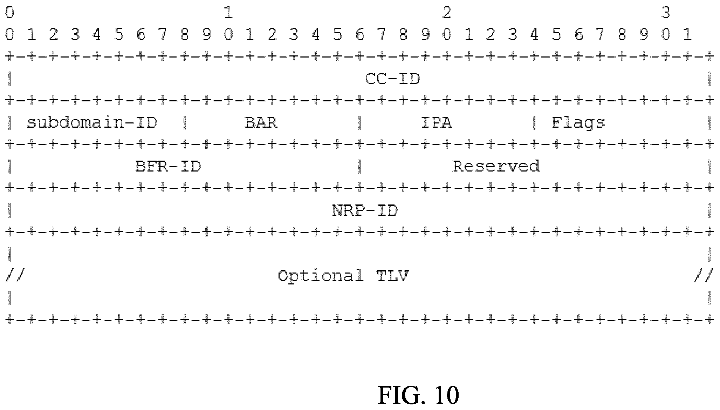

FIG. 10 is a third schematic diagram illustrating a format of a PCEP message in an information advertising method according to an embodiment of the present disclosure. For a PCEP message used in a BIER network, a target network resource partition identifier is allocated based on each BFR identifier, i.e., the PCE allocates a mapping relationship between the BFR identifier and the target network resource partition identifier to each BFR in the BIER network. Mapping information representing the mapping relationship between the BFR identifier and the target network resource partition identifier is carried in a BIER CCI object.

It should be noted that the NRP-ID may be a Flex-Algo ID, or a VTN ID, or a Slice-ID, or a Resource ID, or a slice aggregation ID, which is not particularly limited in this embodiment.

An embodiment of the present disclosure provides an information advertising method based on a PCEP message, which includes S100, including, but not limited to: receiving, by a node of an engineering-based BIER network, a first message carrying mapping information from a controller, where the first message is a PCEP message, and the mapping information is used for representing a mapping relationship between target information and a target network resource partition identifier.

Particularly, the controller delivers mapping information to each node in the engineering-based BIER network through a PCECC, where the mapping information is used for representing a mapping relationship between a BIFT identifier and the target network resource partition identifier.

It should be noted that the BFIR, the BFER, and the BFR are collectively referred to as a PCC, and a PCE assigns labels to the PCCs in the network and sends various control signaling. The BFIR, the BFER, and the BFR are located in the BIER network.

First, support of a PCECC-slicing capability is advertised between the PCC and the PCE, i.e., a bit N is extended in a PCECC capability TLV defined in IETF RFC 9050. The extended bit N is used for representing that the PCE and the PCC support the PCECC-slicing capability. Then, the PCE sends mapping information to each BFR in the BIER network, where the mapping information represents a mapping relationship between a BIFT identifier and a target network resource partition identifier or a mapping relationship between a bit position Bitposition and a target network resource partition identifier. After receiving the mapping information, each PCC can obtain the target network resource partition identifier according to the mapping information, determine a next hop node according to local routing information, and downloads corresponding forwarding indication information.

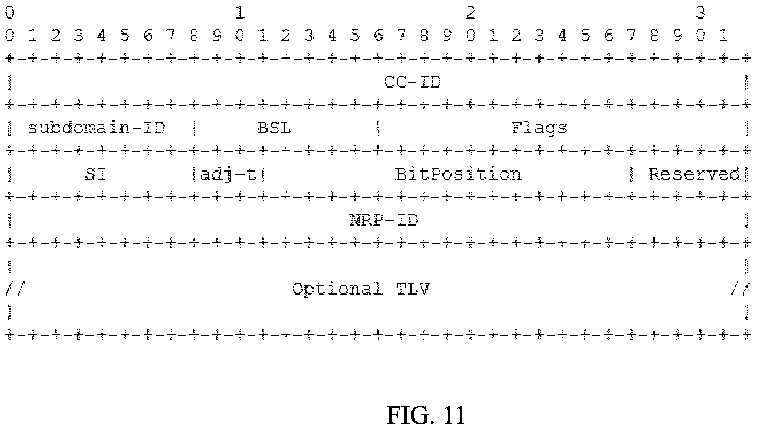

FIG. 11 is a fourth schematic diagram illustrating a format of a PCEP message in an information advertising method according to an embodiment of the present disclosure. The PCEP message is used in a BIER-TE network. A target network resource partition identifier may be allocated based on each bit position Bitposition, i.e., the PCE allocates a mapping relationship between the bit position Bitposition and the target network resource partition identifier to each BFR in the BIER network.

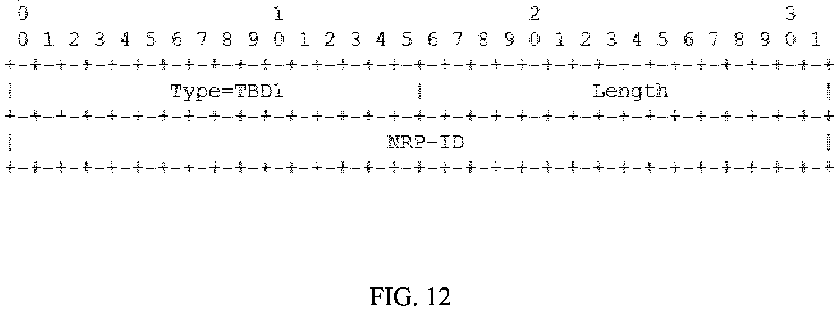

FIG. 12 is a fifth schematic diagram illustrating a format of a PCEP message in an information advertising method according to an embodiment of the present disclosure. The PCEP message is used in a BIER-TE network. An NRP-ID TLV is extended in a BIER CCI object field in the PCEP message, such that the PCEP message includes the NRP-ID TLV, the target network resource partition identifier is carried in the NRP-ID TLV, the target information is carried in the BIER CCI object field, and the NRP-ID TLV is carried in the BIER CCI object field. In this extension method, the mapping information represents the mapping relationship between the BIFT identifier and the target network resource partition identifier, or the mapping information represents the mapping relationship between the bit position Bitposition and the target network resource partition identifier.

It should be noted that the NRP-ID may be a Flex-Algo ID, or a VTN ID, or a Slice-ID, or a Resource ID, or a slice aggregation ID, which is not particularly limited in this embodiment.

An embodiment of the present disclosure provides an information advertising method based on a NETCONF message, which includes S100, including, but not limited to: receiving, by a node of an engineering-based BIER network, a first message carrying mapping information from a controller, where the first message is a NETCONF message, and the mapping information is used for representing a mapping relationship between target information and a target network resource partition identifier.

Particularly, the BIER network is an engineering-based BIER network, the first device is a node in the engineering-based BIER network, the second device is a controller, and the mapping information is carried in the first message sent by the controller to the node. The controller delivers mapping information to each BFR in the BIER-TE network through the NETCONF protocol, where the mapping information represents a mapping relationship between the target network resource partition identifier and a BIFT identifier BIFT-ID, or represents a mapping relationship between the target network resource partition identifier and a BIER sub-domain identifier, or represents a mapping relationship between the target network resource partition identifier and an adjacency identifier adj-id. A specific model is as follows:

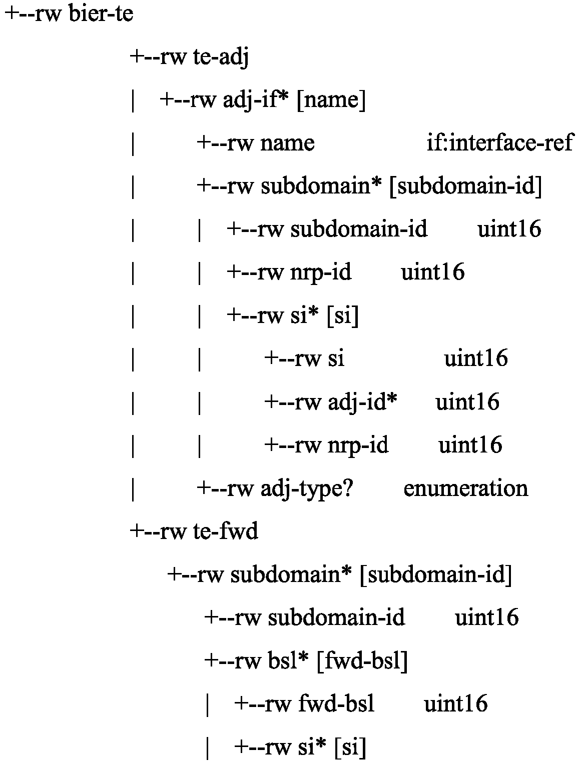

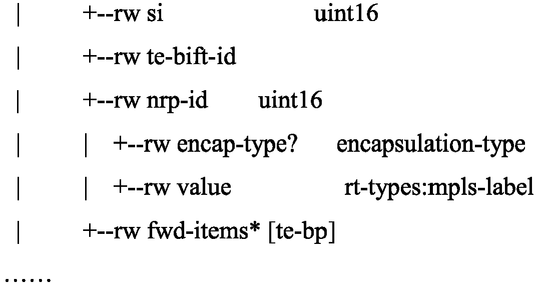

An embodiment of the present disclosure provides an information advertising method based on a NETCONF message, which includes S 100, including, but not limited to: receiving, by a node of a BIER network, a first message carrying mapping information from a controller, where the first message is a NETCONF message, and the mapping information is used for representing a mapping relationship between target information and a target network resource partition identifier.

Particularly, in the BIER network, the first device is a node in the BIER network, the second device is a controller, and the mapping information is carried in the first message sent by the controller to the node. The controller delivers mapping information to each BFR in the BIER network through the NETCONF protocol, where the mapping information represents a mapping relationship between the target network resource partition identifier and a BIFT identifier BIFT-ID, or represents a mapping relationship between the target network resource partition identifier and a BIER sub-domain identifier, or represents a mapping relationship between the target network resource partition identifier and a BFR identifier. A specific model is as follows:

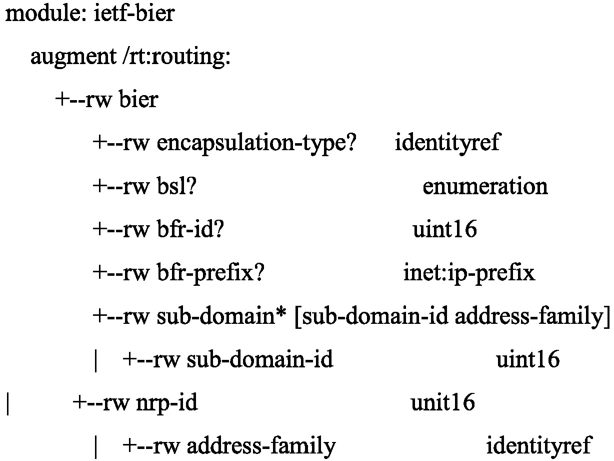

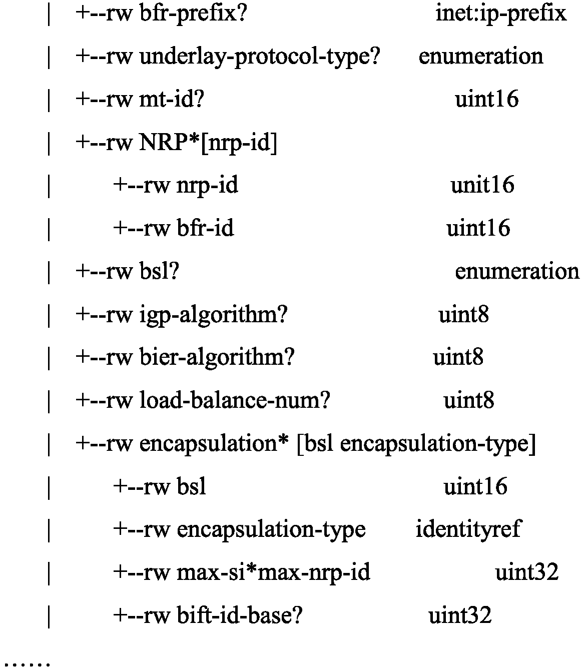

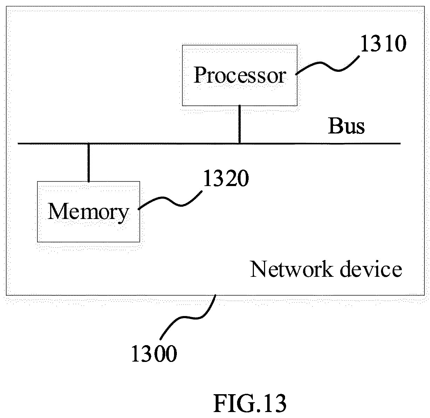

An embodiment of the present disclosure provides an electronic device. As shown in FIG. 13, the electronic device 130 includes, but not limited to
a processor 1310 and a memory 1320.

The memory 1320 stores program instructions which, when executed by the processor 1310, cause the processor 1310 to implement the information advertising method according to any one of the above embodiments.

In a embodiment, the electronic device may be configured to implement S100 in the information advertising method in the above method embodiments.

It should be noted that the processor 1310 and the memory 1320 may be connected by a bus or in other ways.

It can be understood that the processor 1310 may be a Central Processing Unit (CPU). The processor may also be other general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, or the like. The general-purpose processor may be a microprocessor or any conventional processor or the like. Alternatively, the processor 1310 uses one or more integrated circuits for executing related programs to implement the technical schemes provided in the embodiments of the present disclosure.

The memory 1320, as a non-transitory computer-readable storage medium, may be configured for storing a non-transitory software program and a non-transitory computer-executable program, for example, the information advertising method executed by an electronic device according to any one of the embodiments of the present disclosure. The processor 1310 runs the non-transitory software program and the non-transitory computer-executable program stored in the memory 1320, to implement the information advertising method.

The memory 1320 may include a program storage area and a data storage area. The program storage area may store an operating system, and an application required by at least one function. The data storage area may store data and the like required for executing the information advertising method. In addition, the memory 1320 may include a high-speed random access memory, and may also include a non-transitory memory, e.g., at least one magnetic disk storage device, flash memory device, or other non-transitory solid-state storage device. In some implementations, the memory 1320 may include memories located remotely from the processor 1310, and the remote memories may be connected to the processor 1310 via a network. Examples of the network include, but not limited to, the Internet, an intranet, a local area network, a mobile communication network, and combinations thereof.

The non-transitory software program and instructions required to implement the information advertising method are stored in the memory 1320 which, when executed by one or more processors 1310, cause the one or more processors 1310 to implement the information advertising method according to any one of the embodiments of the present disclosure.

An embodiment of the present disclosure provides a computer-readable storage medium, storing program instructions which, when executed by a computer, cause the computer to implement the information advertising method according to any one of the above embodiments or implement the information advertising method according to any one of the above embodiments.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (non-exclusive list) of the computer-readable storage medium include: an electrical connection having one or more wires, a portable computer disk, a hard disk, a Random Access Memory (RAM), a Read-Only Memory (ROM), an erasable programmable Read-Only Memory (EPROM), a flash memory, an optical fiber, a portable Compact Disc Read-Only Memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the operations of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. In cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

An embodiment of the present disclosure provides a computer program product, storing computer instructions which, when executed by a computer, cause the computer to implement the information advertising method according to any one of the above embodiments.

Although some implementations of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. An information advertising method, comprising:
receiving, by a first device, a first message carrying mapping information from a second device, wherein the mapping information is used for representing a mapping relationship between target information and a target network resource partition identifier, and one of the first device and the second device is a forwarding node in a Bit Index Explicit Replication (BIER) network.

2. The information advertising method of claim 1, wherein the target information comprises one of:
a Bit Index Forwarding Table (BIFT) identifier;
a Bit Forwarding Router (BFR) identifier;
a BIER sub-domain identifier; or
a BIER path.

3. The information advertising method of claim 1, wherein the BIER network is an engineering-based Bit Index Explicit Replication (BIER) network, and the target information comprises one of:
a Bit Index Forwarding Table (BIFT) identifier;
a BIER sub-domain identifier;
a bit position; or
a BIER-TE path.

4. The information advertising method of claim 1, wherein the target network resource partition identifier comprises one of:
a slice identifier;
a slice aggregation (SA) identifier;
a network resource partition identifier;
a multi-topology identifier; or
a flexible algorithm identifier.

5. The information advertising method of claim 1, wherein the first device is a head node in the BIER network, the second device is a controller, the mapping information is carried in the first message sent by the controller to the head node, and the first message is a Border Gateway Protocol (BGP) message.

6. The information advertising method of claim 5, wherein the BGP message comprises one of:
a BIER tunnel encapsulation attribute carrying the mapping information; or
an engineering-based BIER tunnel encapsulation attribute carrying the mapping information.

7. The information advertising method of claim 6, wherein the mapping information is used for representing a mapping relationship between a BIER path and the target network resource partition identifier.

8. The information advertising method of claim 7, wherein,
when the BGP message comprises the engineering-based BIER tunnel encapsulation attribute carrying the mapping information, the engineering-based BIER tunnel encapsulation attribute comprises an NRP Path Bitstring sub-TLV, and the mapping information is carried in the NRP Path Bitstring sub-TLV;
or
when the BGP message comprises the BIER tunnel encapsulation attribute carrying the mapping information, the mapping information is carried in a BIER tunnel encapsulation TLV;
or
when the BGP message comprises the engineering-based BIER tunnel encapsulation attribute carrying the mapping information, the engineering-based BIER tunnel encapsulation attribute comprises an NRP-ID sub-TLV and a Path Bitstring sub-TLV, the target network resource partition identifier is carried in the NRP-ID sub-TLV, and an engineering-based BIER path is carried in the Path Bitstring sub-TLV.

9. The information advertising method of claim 1, wherein the first device is a controller, the second device is a head node in the BIER network, the mapping information is carried in the first message sent by the head node to the controller, and the first message is a Border Gateway Protocol Link-state (BGP-LS) message.

10. The information advertising method of claim 9, wherein the mapping information is used for representing a mapping relationship between a BIER sub-domain identifier and the target network resource partition identifier, or for representing a mapping relationship between a Bit Forwarding Router (BFR) identifier and the target network resource partition identifier.

11. The information advertising method of claim 10, wherein the BGP-LS message comprises a BIER information TLV for carrying the mapping information.

12. The information advertising method of claim 9, wherein the mapping information is used for representing a mapping relationship between a BIER sub-domain identifier and the target network resource partition identifier, or for representing a mapping relationship between a BIER bit position and the target network resource partition identifier.

13. The information advertising method of claim 10, wherein the BGP-LS message comprises a BIER-TE information TLV for carrying the mapping information.

14. The information advertising method of claim 9, wherein the mapping information is used for representing a mapping relationship between a BIER path and the target network resource partition identifier.

15. The information advertising method of claim 14, wherein the BGP-LS message comprises a BIER tunnel attribute and/or a BIER-TE tunnel attribute for carrying the mapping information.

16. The information advertising method of claim 9, wherein the mapping information is used for representing a mapping relationship between a Bit Index Forwarding Table (BIFT) identifier and the target network resource partition identifier.

17. The information advertising method of claim 14, wherein the BGP-LS message comprises one of:
a BIER MPLS Encapsulation TLV for carrying the mapping information;
a BIER non-MPLS Encapsulation TLV for carrying the mapping information;
a BIER-TE MPLS Encapsulation TLV for carrying the mapping information; or
a BIER-TE non-MPLS Encapsulation TLV for carrying the mapping information.

18. The information advertising method of claim 1, wherein the first device is a head node in the BIER network, the second device is a controller, the mapping information is carried in the first message sent by the controller to the head node, and the first message is a Path Computation Element Communication Protocol (PCEP) message.

19. The information advertising method of claim 18, wherein,
the PCEP message comprises an NRP BIER-TE-ERO Subobject, and the mapping information is carried in the NRP BIER-TE-ERO Subobject;
or
the PCEP message comprises an NRP ID TLV, the target network resource partition identifier is carried in the NRP ID TLV, the NRP ID TLV is carried in a BIER-TE-ERO Subobject, and an engineering-based BIER path is carried in the BIER-TE-ERO Subobject.

20. The information advertising method of claim 1, wherein the first device is a node in the BIER network, the second device is a controller, the mapping information is carried in the first message sent by the controller to the node, and the first message is a Path Computation Element Communication Protocol (PCEP) message.

21. The information advertising method of claim 20, wherein the PCEP message comprises BIER CCI object, and the mapping information is carried in the BIER CCI object.

22. The information advertising method of claim 1, wherein the BIER network is an engineering-based BIER network, the first device is a node in the engineering-based BIER network, the second device is a controller, the mapping information is carried in the first message sent by the controller to the node, and the first message is a Path Computation Element Communication Protocol (PCEP) message.

23. The information advertising method of claim 22, wherein the PCEP message comprises a BIER-TE CCI object, and the mapping information is carried in the BIER-TE CCI object.

24. The information advertising method of claim 1, wherein the BIER network is an engineering-based BIER network, the first device is a node in the engineering-based BIER network, the second device is a controller, the mapping information is carried in the first message sent by the controller to the node, and the first message is a Network Configuration Protocol (NETCONF) message.

25. The information advertising method of claim 1, wherein the first device is a node in the BIER network, the second device is a controller, the mapping information is carried in the first message sent by the controller to the node, and the first message is a Network Configuration Protocol (NETCONF) message.

26. A network device, comprising:
at least one processor; and
at least one memory, configured for storing at least one program,
wherein the at least one program, when executed by the at least one processor, causes the at least one processor to perform the information advertising method of any one of claims 1 to 25.

27. A computer-readable storage medium, storing a processor-executable program which, when executed by a processor, causes the processor to perform the information advertising method of any one of claims 1 to 25.
